# EUROPEAN PATENT APPLICATION

(11) **EP 3 831 544 A1**
(43) Date of publication of application: **09.06.2021**
(21) Application number: 18930734.1
(22) Date of filing: 21.08.2018
(51) Int. Cl.: B25J 9/16

(54) **METHOD, DEVICE AND SYSTEM FOR CORRECTING OFFLINE PROGRAMMING PROGRAM, MEDIUM, AND TERMINAL**

(71) Applicant: Siemens Aktiengesellschaft, 80333 München (DE); Wang, Kai, Qingdao, Shandong 266555 (CN); Qui, Wen Qing, Beijing 100193 (CN); Wang, Lu, Wuxi, Jiangsu 214129 (CN)
(72) Inventor: WANG, Kai, Shandong 266555 (CN); QIU, Wen Qing, Beijing 100193 (CN); WANG, Lu, Jiangsu 214129 (CN)
(74) Representative: Isarpatent
(86) International application number: PCT/CN2018/101529
(87) International publication number: WO 2020/037496

(57) **Abstract**

The present invention relates to a method, device and system for correcting an offline programming program, a medium, and a terminal offline programming program. The method for correcting an offline programming program comprises: generating, on the basis of digital twin technology, a robot path view indicating a motion track of a robot; setting, according to a preset rule, an offset amount for the robot path view; and correcting an offline programming program according to the offset amount, wherein the offline programming program is used to control motion of the robot. The present invention solves problems in which when an offline programming program is to be corrected, data needs to be collected from an actual environment, a robot has to be shut down for a long time, and the workload is heavy.

## Description

### Technical Field

The present invention relates to the field of offline programming. Specifically, the present invention relates to a method, device, and system for correcting an offline programming program, a medium, a processor, and a terminal.

### Background Art

Offline programming is widely used in complex robot application scenarios.

As a virtual environment cannot accurately map an actual situation, various errors always occur for a robot application. When a robot directly runs a program generated by offline programming software in a real environment, the robot may collide with surrounding objects due to geometrical errors and position errors between the virtual environment and the real environment. Therefore, an offline programming program must be corrected before being used. In a complex robot application scenario, a large number of points need to be corrected, and so the correcting of an offline programming program will require hard work.

In order to solve the above-mentioned problem, a common method is by using data collected from a real environment to first correct the operation part of a robot in a virtual environment. For example, Process Simulate and RobotArt use this method. With this method, a real environment needs to be constructed first. However, in this case, offline programming loses its greatest advantage, that is, allowing a reduction in the shutdown period of a robot by eliminating the need to generate a program in an actual environment.

Another commonly used method is by correcting the Piece Coordinate System (PCS) before putting an offline programming program into use. With this method, although a position error may be corrected, no relative geometrical error is considered, and so a user still needs to calibrate all points in a real environment.

### Summary of the Invention

An embodiment of the present invention provides a method, device, and system for correcting an offline programming program, a medium, and a terminal to at least solve the problems in which when an offline programming program is to be corrected, data needs to be collected from an actual environment, a robot has to be shut down for a long time, and the workload is heavy.

According to an aspect of an embodiment of the present invention, a method for correcting an offline programming program is provided, characterized by comprising: generating, on the basis of digital twin technology, a robot path view indicating a motion track of a robot; setting an offset amount for the robot path view according to a preset rule; and correcting an offline programming program according to the offset amount, wherein the offline programming program is used to control motion of the robot.

Thus, since an offset amount of a robot path view indicating a motion track of a robot generated by digital twin technology is set to correct an offline programming program, this eliminates the need to collect data from an actual environment where the robot operates, avoids downtime of the robot, and makes the correction process easier, more intuitive, and safer, thereby solving the problems in which when an offline programming program is to be corrected, data needs to be collected from an actual environment, a robot has to be shut down for a long time, and the workload is heavy.

In an exemplary embodiment of the method for correcting an offline programming program, generating, on the basis of digital twin technology, a robot path view comprises: loading the offline programming program on the basis of the digital twin technology; obtaining a parameter related to the offline programming program; planning a robot motion track according to the parameter, and calculating an interpolation point on the motion track; and generating a robot path view based on the interpolation point.

Thus, acquisition of a robot path view from an offline programming program eliminates the need to collect data from the actual environment, thereby making the correction process more convenient and safer.

In an exemplary embodiment of the method for correcting an offline programming program, generating, on the basis of digital twin technology, a robot path view indicating a motion track of a robot comprises: loading the offline programming program on the basis of the digital twin technology; obtaining a parameter related to the offline programming program; sending the parameter to a robot; receiving, on the basis of digital twin technology, actual operation data returned from the robot; obtaining an interpolation point on the robot motion track from the actual operation data; and generating a robot path view based on the interpolation point.

Thus, since a robot path view from actual operation data returned by a robot is obtained, on the one hand, the need to collect data from an actual environment is effectively eliminated, so that the correction process becomes more convenient and safer, and on the other hand, a robot path view is allowed to more accurately reflect an actual motion path of the robot so that correction based on the robot path view becomes more accurate.

In an exemplary embodiment of the method for correcting an offline programming program, generating, on the basis of digital twin technology, a robot path view indicating a motion track of a robot further comprises: dividing the robot path view into a plurality of parts.

This makes it convenient for a user to set an offset amount for a corresponding part of the robot path view as needed.

In an exemplary embodiment of the method for correcting an offline programming program, setting an offset amount for a robot path view according to a preset rule comprises: setting an offset amount for a plurality of parts of the robot path view, the entire robot path view, a single point on the robot path view, or a plurality of groups of robot path views, wherein the preset rule comprises a relationship between a distance between the robot and a surrounding object and a safety distance, the safety distance being the minimum distance between the robot and the surrounding object when the robot does not collide with the surrounding object.

Thus, a user can save a lot of time when troubleshooting the robot.

In an exemplary embodiment of the method for correcting an offline programming program, setting an offset amount for a robot path view according to a preset rule comprises: setting an offset amount for the robot path view by means of a graphical user interface and/or text editing, wherein the preset rule comprises a relationship between a distance between the robot and a surrounding object and a safety distance, the safety distance being the minimum distance between the robot and the surrounding object when the robot does not collide with the surrounding object.

Thus, because of operations on a graphical user interface and text editing, only a small amount of hardware resources are occupied, and the operation of setting an offset amount is simple and intuitive.

In an exemplary embodiment of the method for correcting an offline programming program, an offset amount comprises at least one of the following items: an offset amount of the starting point of a robot motion path, an offset amount of the target point of a robot motion path, and an offset amount of a robot motion speed.

Thus, the type of an offset amount may be defined.

In an exemplary embodiment of the method for correcting an offline programming program, correcting an offline programming program according to an offset amount comprises at least one of the following steps: modifying the starting point of the robot motion path according to the offset amount; modifying the target point of the robot motion path according to the offset amount; and modifying a motion speed of the robot according to the offset amount.

Thus, the manner of correcting an offline programming program based on an offset amount may be defined.

In an exemplary embodiment of the method for correcting an offline programming program, after correcting the offline programming program according to the offset amount, the correction method further comprises: generating a corrected offline programming program, and storing the corrected offline programming program in a temporary memory.

Thus, since a corrected offline programming program is stored in a temporary memory, occupation of storage space in the robot is avoided, and it is convenient to update the latest corrected offline programming program at any time.

According to another aspect of an embodiment of the present invention, a device for correcting an offline programming program is further provided, comprising: a path view generator, for generating, on the basis of digital twin technology, a robot path view indicating a motion track of a robot; an offset amount setting module, for setting an offset amount for a robot path view according to a preset rule; and a program corrector, for correcting an offline programming program according to an offset amount, wherein the offline programming program is used to control motion of the robot.

Thus, since an offset amount of a robot path view generated by digital twin technology is set to correct an offline programming program, there is no need to collect data from an actual environment of robot operation, a robot does not need to be shut down, and the correction process is made easier, more intuitive, and safer. This solves the problems in which when an offline programming program is to be corrected, data needs to be collected from an actual environment, a robot has to be shut down for a long time, and the workload is heavy.

According to another aspect of an embodiment of the present invention, a system for correcting an offline programming program is further provided, comprising: a robot controller, for implementing digital twin technology; and a device for correcting an offline programming program, comprising: a path view generator, for generating, on the basis of digital twin technology, a robot path view indicating a motion track of a robot; an offset amount setting module, for setting an offset amount for a robot path view according to a preset rule; and a program corrector, for correcting an offline programming program according to an offset amount, wherein the offline programming program is used to control motion of the robot.

Thus, a robot controller is used to implement digital twin technology to generate a robot path view, and then an offset amount of the robot path view is set to correct an offline programming program; this eliminates the need to collect data from an actual environment where the robot operates, and avoids the shutdown of a robot, making the correction process easier, more intuitive, and safer, thereby providing a solution to the problems in which when an offline programming program is to be corrected, data needs to be collected from an actual environment, a robot has to be shut down for a long time, and the workload is heavy.

According to another aspect of an embodiment of the present invention, a storage medium is further provided, the storage medium comprising a stored program, wherein the program, when run, causes a device comprising the storage medium to execute the above-described method for correcting an offline programming program.

According to another aspect of an embodiment of the present invention, a processor is further provided, which is used to run a program, wherein the program, when run, executes the above-described method for correcting an offline programming program.

According to another aspect of an embodiment of the present invention, an electronic device is further provided, characterized by comprising: one or more processors, a memory, a display device, and one or more programs, wherein the one or more programs are stored in the memory and are configured to, when executed by the one or more processors, cause the electronic device to implement the above-mentioned method for correcting an offline programming program.

In an embodiment of the present invention, since an offset amount of a robot path view indicating a motion track of a robot generated by digital twin technology is set to correct an offline programming program, this eliminates the need to collect data from an actual environment where the robot operates, and avoids the shutdown of a robot, making the correction process easier, more intuitive, and safer, thereby solving the problems in which when an offline programming program is to be corrected, data needs to be collected from an actual environment, a robot has to be shut down for a long time, and the workload is heavy.

The present invention is suitable for correcting an offline programming program of a robot. When the technology of the present invention is adopted, when an offline programming program is to be corrected, there is no need to collect data from an actual environment where the robot operates, and the shutdown period of a robot is reduced, so that the correction process is made easier, more intuitive, and safer. In addition, the technology of the present invention allows further expansion of the use of digital twin technology, making it a new way of controlling a robot.

### Brief Description of the Drawings

The drawings shown herein are intended to provide a further understanding of the present invention and constitute a part of the present invention. An exemplary embodiment of the present invention and a description thereof are intended to explain the present invention, and do not constitute an improper limitation of the present invention. Among the drawings,
Figure 1 is a flowchart for a method for correcting an offline programming program according to an embodiment of the present invention;
Figure 2 shows a process view of correcting, on the basis of digital twin technology, an offline programming program according to an exemplary embodiment of the present invention;
Figure 3 is a flowchart for a method for correcting an offline programming program according to an exemplary embodiment of the present invention;
Figure 4 is a flowchart for a method for correcting an offline programming program according to another exemplary embodiment of the present invention;
Figure 5 is a block diagram for a device for correcting an offline programming program according to an embodiment of the present invention;
Figure 6 is a block diagram for a device for correcting an offline programming program according to another embodiment of the present invention;
Figure 7 is a block diagram for a system for correcting an offline programming program according to an embodiment of the present invention; and
Figure 8 shows a specific example of a system for correcting an offline programming program according to an exemplary embodiment of the present invention.

### Brief Description of the Reference Numerals

S102: Generate, on the basis of digital twin technology, a robot path view;
S104: Set an offset amount for the robot path view according to a preset rule;
S106: Correct an offline programming program according to the offset amount, wherein the offline programming program is used to control motion of a robot;
S302: Generate, on the basis of digital twin technology, a robot path view from the offline programming program;
S304: Set an offset amount for the robot path view according to a relationship between a distance between the robot and a surrounding object and a safety distance;
S306: Modify the offline programming program according to the offset amount set for the robot path view;
S308: Generate a modified offline programming program as the corrected offline programming program, and store the corrected offline programming program in a temporary memory;
S402: Generate, on the basis of digital twin technology, a robot path view from actual operation data of the robot;
S404: Set an offset amount for the robot path view according to a relationship between a distance between the robot and a surrounding object and a safety distance;
S406: Modify the offline programming program according to the offset amount set for the robot path view;
S408: Generate a modified offline programming program as the corrected offline programming program, and store the corrected offline programming program in a temporary memory;
5: Device for correcting an offline programming program;
502: Path view generator;
504: Offset amount setting module;
506: Program corrector;
5022: Program loading module;
5024: Parameter acquisition module;
5026: Interpolation point acquisition module;
5028: Path view generation module;
5030: Transceiver module;
5032: Path division module;
7: Correction system;
702: Robot controller.
8: Correction system;
802: Correction device
804: Robot controller
806: Robot program memory
8022: Temporary memory
8040: Command parser
8042: Program executor
8044: Robot control kernel
8046: Driver interface
8048: Robot digital twin software module

### Specific Embodiments

In order for those of ordinary skill in the art to better understand the present invention, technical solutions provided in embodiments of the present invention will be described clearly and completely below with reference to the drawings for embodiments of the present invention. Obviously, the described embodiments are only some, but not all, embodiments of the present invention. Any embodiments obtained by those of ordinary skill in the art based on the described embodiments of the present invention without making inventive efforts fall into the protective scope of the present invention.

It should be noted that the terms "comprising", "provided with", and any variants thereof in the description, claims of the present invention, and the above-described drawings are intended to cover nonexclusive inclusion. For example, a process, method, system, product, or device comprising a series of steps or modules or units are not necessarily limited to explicitly listed steps or units, and instead may include other steps or modules or units that are not explicitly listed or are intrinsic to these processes, methods, systems, products, or devices.

According to an embodiment of the present invention, a method for correcting, on the basis of digital twin technology, an offline programming program is provided. Those of ordinary skill in the art can understand that digital twin technology is a technology for digitally copying a physical object to simulate the behavior of the physical object in a real environment. The specific meaning of digital twin technology will not be explained again herein.

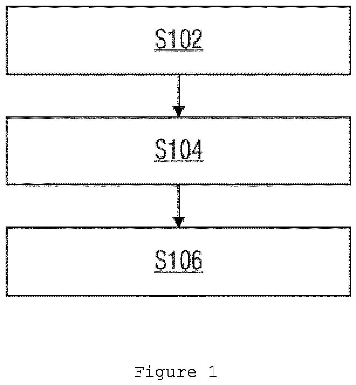

Figure 1 is a flowchart for a method for correcting an offline programming program according to an embodiment of the present invention. Referring to Figure 1, according to an embodiment of the present invention, a method for correcting an offline programming program comprises:
S102, generating, on the basis of digital twin technology, a robot path view indicating a motion track of a robot;
S104, setting an offset amount for the robot path view according to a preset rule; and
S106, correcting an offline programming program according to the offset amount, wherein the offline programming program is used to control motion of the robot.

In a specific example, digital twin technology may be implemented by a robot controller. A robot controller may comprise a command parser, a program executor, a robot control kernel (RCK), a robot digital twin software module, and a driver interface.

When the robot controller is running, the command parser parses a program in the robot program memory; the program executor obtains parameters, such as the starting point, target point, and motion speed of a robot motion track from the parsed program, and calls the robot control kernel; the robot control kernel, according to these parameters, plans a motion track of the robot and calculates an interpolation point on the motion track of the robot; the robot control kernel sends the calculated interpolation point, the angle of an axis of the robot, and other parameters to the robot digital twin software module; and the robot digital twin software module starts simulating the motion of the robot.

Formed by interpolation points on a robot motion track, a robot path view indicates a visual view of the robot motion track, and may be recorded and displayed on an image device, for example, on a Teach Pendant (TP) or the screen of the robot controller, by a path view generator.

The view path generator can display the robot path view on the image device, and is connected to and in communication with the robot controller.

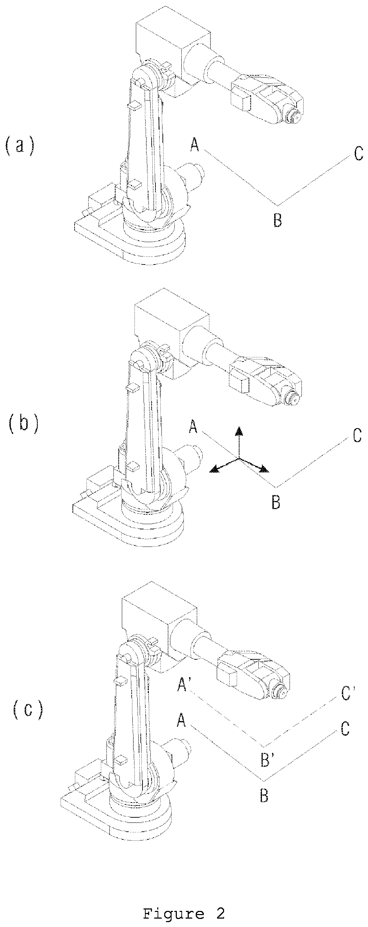

For example, Figure 2 shows a process view of correcting, on the basis of digital twin technology, an offline programming program according to an exemplary embodiment of the present invention.

As shown in a) in Figure 2, the robot path view ABC indicating a motion track of the robot is generated on the basis of digital twin technology, and the robot path view ABC is displayed on an image device by the view path generator, as indicated by the solid line in a) in Figure 2.

As shown in b) in Figure 2, an offset amount is set for an interpolation point on the robot path view ABC.

According to the offset amount, the offline programming program that controls the motion of the robot is corrected, and a corrected offline programming program is generated.

As shown in c) in Figure 2, a new robot path view is formed according to the corrected offline programming program, as indicated by the dashed line A'B'C' in c) in Figure 2.

Thus, since an offset amount of a robot path view indicating a motion track of a robot generated by digital twin technology is set to correct an offline programming program, this eliminates the need to collect data from an actual environment where the robot operates, and avoids the shutdown of a robot, making the correction process easier, more intuitive, and safer; this solves the problems in which when an offline programming program is to be corrected, data needs to be collected from an actual environment, a robot has to be shut down for a long time, and the workload is heavy.

According to an embodiment of the present invention, generating, on the basis of digital twin technology, a robot path view indicating a motion track of a robot comprises: loading the offline programming program on the basis of the digital twin technology; obtaining a parameter related to the offline programming program; planning a robot motion track according to the parameter, and calculating an interpolation point on the motion track; and generating a robot path view based on the interpolation point.

The offline programming program, stored in the robot program memory, is used to control motion of the robot.

Parameters related to the offline programming program include, but are not limited to, the starting point of a robot motion track, the target point of a robot motion track, the motion speed of the robot, and the angle of each axis of the robot. A robot motion track is the optimal track among a plurality of tracks determined by the starting point and the target point. An interpolation point is a discrete point on a robot track. A path view generator can visually display an interpolation point on an image device, for example, a TP.

Thus, acquisition of a robot path view from an offline programming program eliminates the need to collect data from the actual environment, thereby making the correction process more convenient and safer.

According to an embodiment of the present invention, generating, on the basis of digital twin technology, a robot path view indicating a motion track of a robot comprises: loading the offline programming program on the basis of the digital twin technology; obtaining a parameter related to the offline programming program; sending the parameter to a robot; receiving, with the digital twin technology, actual operation data returned from the robot; obtaining an interpolation point on the robot motion track from the actual operation data; and generating a robot path view based on the interpolation point.

Through the driver interface of the robot controller, parameters, such as the starting point of the robot motion track, the target point of the robot motion track, the motion speed of the robot, and the angle of each axis of the robot, are sent to the robot, and the robot moves under the control of these parameters.

Actual operation data returned from the robot is received through the driver interface of the robot controller, the actual operation data including, but not limited to, the angle of each axis of the robot, the motion speed of the robot, and the coordinates of each interpolation point on the robot motion track.

Thus, since a robot path view from actual operation data returned by a robot is obtained, on the one hand, the need to collect data from an actual environment is effectively eliminated, so that the correction process becomes more convenient and safer, and on the other hand, a robot path view is allowed to more accurately reflect an actual motion path of the robot so that correction based on the robot path view becomes more accurate.

According to an embodiment of the present invention, generating, on the basis of digital twin technology, a robot path view indicating a motion track of a robot further comprises: dividing the robot path view into a plurality of parts.

A robot path view may be divided into a plurality of parts according to a user's needs, and the user can operate each part.

This makes it convenient for a user to set an offset amount for a corresponding part of the robot path view as needed.

According to an embodiment of the present invention, setting an offset amount for a robot path view according to a preset rule comprises: setting an offset amount for a plurality of parts of the robot path view, the entire robot path view, a single point on the robot path view, or a plurality of groups of robot path views, wherein the preset rule comprises a relationship between a distance between the robot and a surrounding object and a safety distance, the safety distance being the minimum distance between the robot and the surrounding object when the robot does not collide with the surrounding object.

Compared with modifying a robot track by modifying a robot path program, in this embodiment, a user may modify a motion track of the robot simply by intuitively setting an offset amount for the track through a view, without wasting a lot of time modifying the code step by step.

Thus, a user can save a lot of time when troubleshooting the robot.

According to an embodiment of the present invention, setting an offset amount for a robot path view according to a preset rule comprises: setting an offset amount for the robot path view by means of a graphical user interface and/or text editing, wherein the preset rule comprises a relationship between a distance between the robot and a surrounding object and a safety distance, the safety distance being the minimum distance between the robot and the surrounding object when the robot does not collide with the surrounding object.

A user can set a desired offset amount for a robot path view by dragging and dropping the robot path view and inputting numbers on the graphical user interface.

Alternatively, a user can set a desired offset amount for a robot path view in the text editing mode of inputting numbers.

Thus, because of operations on a graphical user interface and text editing, only a small amount of hardware resources are occupied, and the operation of setting an offset amount is simple and intuitive.

According to an embodiment of the present invention, an offset amount comprises at least one of the following items: an offset amount of the starting point of a robot motion path, an offset amount of the target point of a robot motion path, and an offset amount of a robot motion speed.

Thus, the type of an offset amount may be defined.

According to an embodiment of the present invention, correcting an offline programming program according to an offset amount comprises at least one of the following steps: modifying the starting point of the robot motion path according to the offset amount; modifying the target point of the robot motion path according to the offset amount; and modifying a motion speed of the robot according to the offset amount.

A modification includes, but is not limited to, reading an offline programming program, and modifying respectively the parts of the program corresponding to the starting point of the robot motion path, the target point of the robot motion path, and the robot motion speed for which offset amounts have been set according to the set offset amounts.

Thus, the manner of correcting an offline programming program based on an offset amount may be defined.

According to an embodiment of the present invention, after correcting the offline programming program according to the offset amount, the correction method further comprises: generating a corrected offline programming program, and storing the corrected offline programming program in a temporary memory.

A temporary memory is used to temporarily store a corrected offline programming program.

Thus, since a corrected offline programming program is stored in a temporary memory, occupation of storage space in the robot is avoided, and it is convenient to update the latest corrected offline programming program at any time.

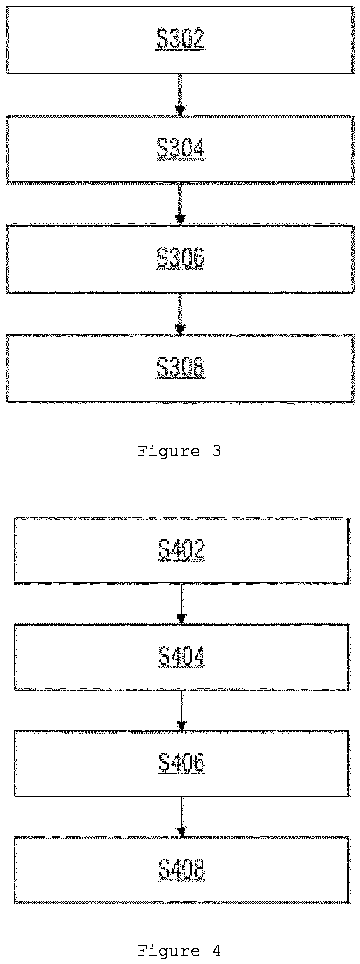

The present invention further provides a method for correcting an offline programming program according to an exemplary embodiment of the present invention. Figure 3 is a flowchart for a method for correcting an offline programming program according to an exemplary embodiment of the present invention. Referring to Figure 3, a method for correcting an offline programming program according to an exemplary embodiment of the present invention comprises:
S302: Generating, on the basis of digital twin technology, a robot path view from an offline programming program.

Specifically, the command parser of the robot controller is used to load an offline programming program from the robot program memory and parse the offline programming program, where the offline programming program is used to control motion of the robot; the program executor of the robot controller is used to obtain relevant parameters from the parsed offline programming program, and call the robot control kernel of the robot controller, wherein the relevant parameters include the starting point, the target point, and the motion speed of the robot motion track. The robot control kernel is used to, according to the above-mentioned relevant parameters, plan a motion track of the robot and calculate the interpolation points on the robot motion track, and then send the calculated interpolation points, the angle of the axis of the robot, and other parameters to the robot digital twin software module of the robot controller, so that the robot digital twin software module starts simulating the motion of the robot; the calculated interpolation points are received from the robot control kernel, and a robot path view is generated on the screen of the robot controller based on these interpolation points.

When a robot path view is generated, the robot path view may be divided into a plurality of parts, each of which is operable by the user. The user can operate each part as needed.

S304: Set an offset amount for the robot path view according to a relationship between a distance between the robot and a surrounding object and a safety distance.

The safety distance here refers to, on a robot motion path, the minimum distance between the robot and the surrounding object when the robot does not collide with the surrounding object. When a distance between the robot and a surrounding object is smaller than the safe distance, an offset amount is set for the robot path view to keep the robot motion track away from a surrounding object. For setting an offset amount, a relatively large offset amount may be set first to ensure that a distance between the robot and a surrounding object is absolutely greater than the safe distance; then, the offset amount may be gradually adjusted in subsequent correction so that a distance between the robot and a surrounding object is kept within an appropriate range.

In order to prevent the robot from colliding with a surrounding object, an offset amount may be set for the starting point of the robot motion path in the robot motion path view and the target point of the robot motion path according to the relative position and distance between the robot and a surrounding object; alternatively, an offset amount may also be set for a certain segment or a plurality of segments in the robot motion path view, or an offset amount may be set for the entire robot motion path view, or an offset amount may be set for a plurality of groups of robot path views.

A method of setting an offset amount comprises, but is not limited to, dragging and dropping a robot path view in the graphical user interface and entering numbers in the graphical user interface; and performing text editing.

With the above-described method of setting an offset amount, only a small amount of hardware resources are occupied, and the operation is simple and intuitive so that a lot of time is saved.

By the setting of an offset amount, the new path followed by the robot is kept away from a surrounding object to ensure safety, while the tool orientation of the robot on the new path remains the same as that on the original path. For example, if the tool orientation of the robot on the original path is from top to bottom, after an offset amount is set for the path followed by the robot, the tool orientation of the robot is still from top to bottom, except that the path followed by the robot is offset to the left or right.

S306: Modify the offline programming program according to the offset amount set for the robot path view.

For example, read an offline programming program, and modify respectively the parts of the program corresponding to the starting point of the robot motion path, the target point of the robot motion path, and the robot motion speed for which offset amounts have been set according to the set offset amounts.

S308: Generate the modified offline programming program as a corrected offline programming program, and store the corrected offline programming program in a temporary memory.

Then, a robot path view may be generated from the corrected offline programming program again on the basis of digital twin technology; steps similar to the above-described S304 to S308 may be repeated to further correct the corrected offline programming program until an offset amount of the robot path view falls within a proper range; thus, the correcting of the offline programming program is stopped.

In this exemplary embodiment, a robot path view is generated from an offline programming program itself by using only digital twin technology, which eliminates the need to collect data from the actual environment, thereby making the correction process more convenient and safer.

The present invention further provides a method for correcting an offline programming program according to another exemplary embodiment of the present invention. Figure 4 is a flowchart for a method for correcting an offline programming program according to another exemplary embodiment of the present invention. Referring to Figure 4, a method for correcting an offline programming program according to another exemplary embodiment of the present invention comprises:
S402: Generate, on the basis of digital twin technology, a robot path view from actual operation data of a robot.

Specifically, the command parser of the robot controller is used to load an offline programming program from the robot program memory and parse the offline programming program, where the offline programming program is used to control motion of the robot; the program executor of the robot controller is used to obtain relevant parameters from the parsed offline programming program, and call the robot control kernel of the robot controller, wherein the relevant parameters include the starting point, the target point, and the motion speed of the robot motion track; the robot control kernel is used to, according to the above-mentioned relevant parameters, plan a motion track of the robot and calculate the interpolation points on the robot motion track, and then send the calculated interpolation points, the angle of the axis of the robot, and other parameters to the robot, thereby controlling the motion of the robot; returned actual operation data indicating the actual motion track of the robot is received from the robot; an interpolation point on the robot motion track is obtained from the actual operation data; then, a robot path view is generated on the screen of the robot controller according to the above-mentioned interpolation points.

S404: Set an offset amount for the robot path view according to a relationship between a distance between the robot and a surrounding object and a safety distance. The operation mode of this step is similar to that of step S304, and will not be described again herein.

S406: Modify the offline programming program according to the offset amount set for the robot path view. The operation mode of this step is similar to that of step S306 and will not be described again herein.

S408: Generate the modified offline programming program as a corrected offline programming program, and store the corrected offline programming program in a temporary memory. The operation mode of this step is similar to that of step S306 and will not be described again herein.

Then, the corrected offline programming program may be sent to the robot, and actual operation data returned by the robot may be received; using the actual operation data returned from the robot, a robot path view is generated; steps similar to the above-described S404 to S408 may be repeated to further correct the corrected offline programming program until an offset amount of the robot path view falls within a proper range; thus, the correcting of the offline programming program is stopped.

In this exemplary embodiment, since a robot path view from actual operation data returned by a robot is obtained, on the one hand, the need to collect data from an actual environment is effectively eliminated, so that the correction process becomes more convenient and safer, and on the other hand, a robot path view is allowed to more accurately reflect an actual motion path of the robot so that correction based on the robot path view becomes more accurate.

Although it is described above that an offline programming program is corrected based on only a robot path view generated from the offline programming program or based on only a robot path view obtained from actual operation data returned by a robot, the present invention is not limited thereto.

During the correcting of an offline programming program, the offline programming program may be corrected by alternately using, in any combination, a robot path view generated from the offline programming program and a robot path view obtained from actual operation data returned by the robot. For example, a robot path view generated by the offline programming program may be used first to correct the offline programming program, and then a robot path view obtained from actual operation data returned by the robot may be used to further correct the corrected offline programming program.

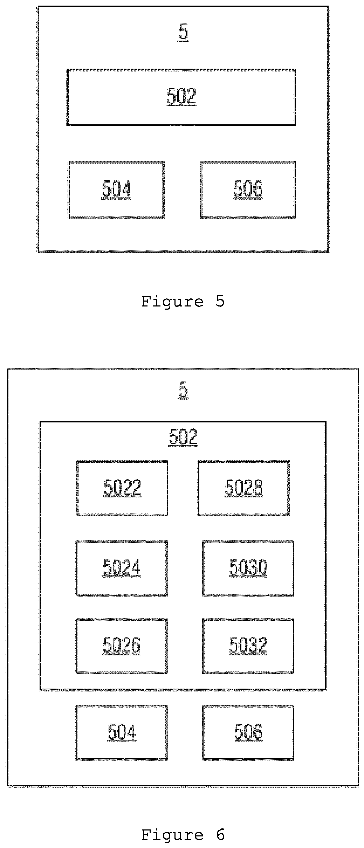

According to an embodiment of the present invention, a device for correcting an offline programming program is provided. Figure 5 is a block diagram for a device for correcting an offline programming program according to an example of the present invention. Referring to Figure 5, the device 5 for correcting an offline programming program according to an example of the present invention comprises:
a path view generator 502, for generating, on the basis of digital twin technology, a robot path view indicating a motion track of a robot;
an offset amount setting module 504, connected to the path view generator 502 and used for setting an offset amount for a robot path view according to a preset rule; and
a program corrector 506, connected to the offset amount setting module 504 and used for correcting an offline programming program according to the offset amount, wherein the offline programming program is used to control motion of the robot.

Details about the operations and functions of various parts of the device 5 for correcting an offline programming program according to an embodiment of the present invention may be the same as or similar to relevant parts of the method for correcting an offline programming program according to an embodiment of the present invention described with reference to Figure 1, for example, and will not be described again herein.

According to embodiments of the present invention, a device for correcting an offline programming program according to another embodiment of the present invention is provided. Figure 6 is a block diagram for a device for correcting an offline programming program according to another embodiment of the present invention. The device for correcting an offline programming program according to another embodiment of the present invention comprises all the components of the device for correcting an offline programming program shown in Figure 5. For descriptions of these components, refer to the above-described embodiment, and no similar descriptions will be provided again herein.

In addition, referring to Figure 6, in the device 5 for correcting an offline programming program according to another embodiment of the present invention, the path view generator 502 specifically comprises:
a program loading module 5022 for loading the offline programming program on the basis of the digital twin technology;
a parameter acquisition module 5024 connected to the program loading module 5022 and used for obtaining a parameter related to the offline programming program;
an interpolation point acquisition module 5026 connected to the parameter acquisition module 5024 and used for planning a robot motion track according to the parameter, and calculating an interpolation point on the motion track/obtaining, from the actual operation data, an interpolation point on the robot motion track;
a path view generation module 5028, connected to the interpolation point acquisition module 5026 and used for generating a robot path view according to interpolation points; a transceiver module 5030, connected to the parameter acquisition module 5024 and the robot, and used for sending parameters to the robot/receiving, by digital twin technology, actual operation data returned from the robot; and
a path division module 5032, connected to the path view generation module 5028 and used for dividing a robot path view into a plurality of parts.

In addition, the device 5 for correcting an offline programming program according to another embodiment of the present invention may further comprise a temporary memory (not shown in the figure) for temporarily storing the corrected offline programming program.

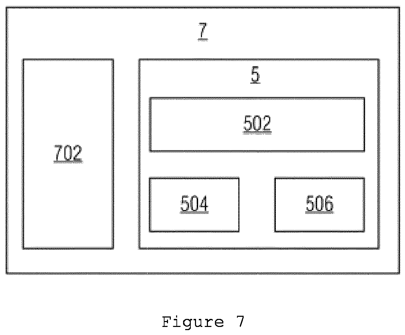

According to an embodiment of the present invention, a system for correcting an offline programming program is further provided. Figure 7 is a block diagram for a system for correcting an offline programming program according to an embodiment of the present invention. Referring to Figure 7, the correction system 7 for correcting an offline programming program according to an embodiment of the present invention comprises: a robot controller 702 for implementing digital twin technology; and a device 5 for correcting an offline programming program, comprising: a path view generator 502, for generating, on the basis of digital twin technology, a robot path view indicating a motion track of a robot; an offset amount setting module 504 for setting an offset amount for a robot path view according to a preset rule; and a program corrector 506 for correcting an offline programming program according to the offset amount, wherein the offline programming program is used to control motion of the robot.

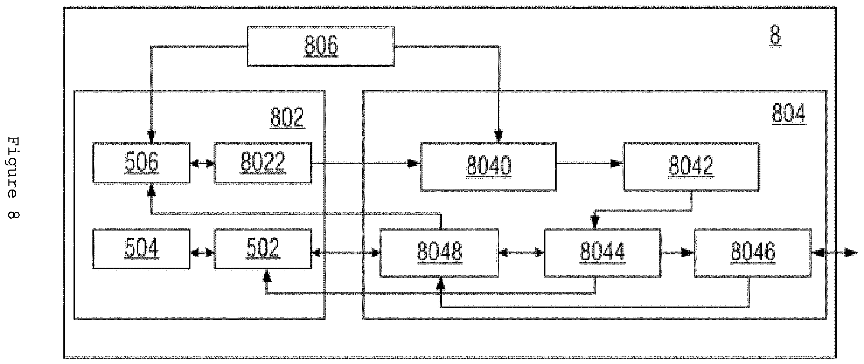

Figure 8 shows a specific example of the system 8 for correcting an offline programming program according to an exemplary embodiment of the present invention.

For example, the correction system comprises a correction device 802, a robot controller 804, and a robot program memory 806,
wherein the correction device 802 comprises: a path view generator 502, for generating, on the basis of digital twin technology, a robot path view indicating a motion track of a robot; an offset amount setting module 504 for setting an offset amount for a robot path view according to a preset rule; and a program corrector 506 for correcting an offline programming program according to the offset amount. The correction device 802 further comprises a temporary memory 8022 for temporarily storing the corrected offline programming program.

The robot controller 804 comprises: a command parser 8040 for parsing a program loaded from the robot program memory 806 or the temporary memory 8022; a program executor 8042 for obtaining parameters, such as the starting point, target point, and motion speed of the robot motion track, from the program parsed by the command parser 8040, and calling the robot control kernel; a robot control kernel 8044 for planning a motion track of the robot and calculating an interpolation point on the motion track of the robot according to the above-mentioned parameters; a driver interface 8046 for sending parameters, such as the starting point of the robot motion track, the target point of the robot motion track, the motion speed of the robot, and the angle of each axis of the robot, from the robot control kernel 8044 to the robot; and a robot digital twin software module 8048, for receiving a calculated interpolation point on the robot motion track from the robot control kernel 8044 or an interpolation point on the robot motion track obtained from actual operation data received through the driver interface 8046 to simulate motion of the robot.

Here, the path view generator 502 and the robot controller 804 are described as separate devices, but the present invention is not limited thereto. Each component in the robot controller 804 may be embedded in the path view generator 502. For example, the command parser 8040 can implement a function of the program loading module 5022 in the path view generator 502; the program executor 8042 can implement a function of the parameter acquisition module 5024 in the path view generator 502; the robot control kernel 8044 can implement a function of the interpolation point acquisition module 5026 in the path view generator 502; and the driver interface 8046 can implement a function of the transceiver module 5030 in the path view generator 502.

According to an embodiment of the present invention, a storage medium is further provided, the storage medium comprising a stored program, wherein the program, when run, causes a device comprising the storage medium to implement the above-described method for correcting an offline programming program.

According to an embodiment of the present invention, a processor is further provided, which is used to run a program, wherein the program, when run, implements the above-described method for correcting an offline programming program.

According to an embodiment of the present invention, an electronic device is further provided, characterized by comprising: one or more processors, a memory, a display device, and one or more programs, wherein the one or more programs are stored in the memory and configured to, when executed by the one or more processors, causes the electronic device to implement the above-described method for correcting an offline programming program.

In each of the above-described embodiments of the present invention, particular emphasis is put on an aspect, respectively; for a part not detailed in an embodiment, references may be made to relevant descriptions in other embodiments.

It should be understood that the technical contents disclosed in the embodiments provided by the present invention may be implemented by other methods. The above-described device embodiment is only illustrative. For example, the division of said units or modules is only logical function division, and an alternative division method may be employed in actual implementation. For example, a plurality of units or modules may be combined or integrated into another system, or certain characteristics may be ignored or not be executed. In addition, the shown or discussed mutual coupling or direct coupling or communication connection may be established via certain interfaces, and indirect coupling or communication connection between modules or units may be electrical or in any other form.

Said units or modules described as separate components may or may not be physically separated. Components shown as units or modules may or may not be physical units or modules; in other words, they may be located in the same place or may be distributed on a plurality of network units or modules. An objective of the technical solution of an embodiment may be achieved by selecting some or all of the units or modules based on actual needs.

Further, the functional units or modules in each embodiment of the present invention may be integrated in one processing unit or module, or each of the functional units or modules may exist physically and separately, or two or more units or modules may be integrated in one unit or module. Said integrated unit or module may be implemented in the form of hardware or may be implemented in the form of a software functional unit or module.

To be implemented in the form of a software functional unit and sold or used as a standalone product, said integrated unit may be stored in a computer-readable storage medium. Based on such an understanding, the technical solution of the present invention essentially, or for a part contributing to the prior art, or for all or part of the technical solution, may be embodied in the form of a software product. The computer software product is stored in a storage medium, comprising a plurality of instructions for causing a computer device (a personal computer, server, network device, etc.) to execute all or part of the steps of the method described in each embodiment of the present invention. Examples of the above-described storage medium include USB drive, Read-Only Memory (ROM), Random Access Memory (RAM), movable hard disk, magnetic disk, CD-ROM, or any other medium that can store program code.

While the present invention has been particularly described above with reference to preferred embodiments, it should be understood that those of ordinary skill in the art can make various improvements and modifications without departing from the principle of the present invention, and that such improvements and modifications also fall into the protective scope of the present invention.

## Claims

1. A method for correcting an offline programming program, **characterized by** comprising:
generating, on the basis of digital twin technology, a robot path view indicating a motion track of a robot;
setting an offset amount for the robot path view according to a preset rule; and
correcting an offline programming program according to the offset amount, wherein the offline programming program is used to control motion of the robot.

2. The correction method as claimed in claim 1, **characterized in that** generating, on the basis of digital twin technology, a robot path view indicating a motion track of a robot comprises:
loading the offline programming program on the basis of the digital twin technology;
obtaining a parameter related to the offline programming program;
planning a motion track of the robot and calculating an interpolation point on the motion track of the robot according to the above-mentioned parameter; and
generating a robot path view based on the interpolation point.

3. The correction method as claimed in claim 1, **characterized in that** generating, on the basis of digital twin technology, a robot path view indicating a motion track of a robot comprises:
loading the offline programming program on the basis of the digital twin technology;
obtaining a parameter related to the offline programming program;
sending the parameter to the robot;
receiving, with the digital twin technology, actual operation data returned from the robot;
obtaining, from the actual operation data, an interpolation point on the robot motion track; and
generating a robot path view based on the interpolation point.

4. The correction method as claimed in any one of claims 1 to 3, **characterized in that** generating, on the basis of digital twin technology, a robot path view indicating a motion track of a robot further comprises:
dividing the robot path view into a plurality of parts.

5. The correction method as claimed in claim 4, **characterized in that** setting an offset amount for the robot path view according to a preset rule comprises:
setting an offset amount for a plurality of parts of the robot path view, the entire robot path view, a single point on the robot path view, or a plurality of groups of robot path views, wherein the preset rule comprises a relationship between a distance between the robot and a surrounding object and a safety distance, the safety distance being the minimum distance between the robot and the surrounding object when the robot does not collide with the surrounding object.

6. The correction method as claimed in any one of claims 1 to 3, **characterized in that** setting an offset amount for the robot path view according to a preset rule comprises:
setting an offset amount for the robot path view by means of a graphical user interface and/or text editing,
wherein the preset rule comprises a relationship between a distance between the robot and a surrounding object and a safety distance, the safety distance being the minimum distance between the robot and the surrounding object when the robot does not collide with the surrounding object.

7. The correction method as claimed in any one of claims 1 to 3, **characterized in that** the offset amount comprises at least one of the following items: an offset amount of the starting point of a robot motion path, an offset amount of the target point of a robot motion path, and an offset amount of a robot motion speed.

8. The correction method as claimed in claim 7, **characterized in that** correcting an offline programming program according to the offset amount comprises at least one of the following steps:
modifying the starting point of the robot motion path according to the offset amount;
modifying the target point of the robot motion path according to the offset amount; and
modifying a motion speed of the robot according to the offset amount.

9. The correction method as claimed in any one of claims 1 to 3, **characterized in that** after correcting the offline programming program according to the offset amount, the correction method further comprises:
generating a corrected offline programming program, and storing the corrected offline programming program in a temporary memory.

10. A device for correcting an offline programming program, **characterized by** comprising:
a path view generator, for generating, on the basis of digital twin technology, a robot path view indicating a motion track of a robot;
an offset amount setting module for setting an offset amount for the robot path view according to a preset rule; and
a program corrector for correcting an offline programming program according to the offset amount, wherein the offline programming program is used to control motion of the robot.

11. A system for correcting an offline programming program, **characterized by** comprising:
a robot controller, for implementing digital twin technology; and
a device for correcting an offline programming program, comprising:
a path view generator, for generating, on the basis of digital twin technology, a robot path view indicating a motion track of a robot;
an offset amount setting module for setting an offset amount for the robot path view according to a preset rule; and
a program corrector for correcting an offline programming program according to the offset amount, wherein the offline programming program is used to control motion of the robot.

12. A storage medium, **characterized by** comprising a stored program, wherein the program, when run, causes a device comprising the storage medium to implement the correction method as claimed in any one of claims 1 to 9.

13. A processor, **characterized by** being used to run a program, wherein the program, when run, implements the correction method as claimed in any one of claims 1 to 9.

14. An electronic device, **characterized by** comprising one or more processors, a memory, a display device, and one or more programs, wherein the one or more programs are stored in the memory and are configured to, when executed by the one or more processors, cause the electronic device to implement the correction method as claimed in any one of claims 1 to 9.
